# EUROPÄISCHE PATENTSCHRIFT

(11) **EP 3 818 607 B1**
(45) Veröffentlichungstag und Bekanntmachung des Hinweises auf die Patenterteilung: **19.07.2023**
(21) Anmeldenummer: 19735561.3
(22) Anmeldetag: 03.07.2019
(51) Int. Cl.: H02J 3/24, F03D 7/02, H02J 3/38

(54) **VERFAHREN UND WINDENERGIEANLAGE ZUM BEDÄMPFEN NIEDERFREQUENTER SCHWINGUNGEN IN EINEM ELEKTRISCHEN VERSORGUNGSNETZ**
METHOD AND WIND TURBINE FOR DAMPING LOW FREQUENCY VIBRATIONS IN AN ELECTRICAL SUPPLY GRID
PROCÉDÉ ET INSTALLATION D'ÉNERGIE ÉOLIENNE POUR ATTÉNUER DES OSCILLATIONS BASSE FRÉQUENCE DANS UN RÉSEAU D'ALIMENTATION ÉLECTRIQUE

(30) Priorität: 06.07.2018 DE 102018116442
(43) Veröffentlichungstag der Anmeldung: 12.05.2021
(73) Patentinhaber: Wobben Properties GmbH, 26607 Aurich (DE)
(72) Erfinder: BROMBACH, Johannes, 13437 Berlin (DE); SCHWANKA TREVISAN, Aramis, 26605 Aurich (DE)
(74) Vertreter: Eisenführ Speiser
(86) Internationale Anmeldenummer: PCT/EP2019/067842
(87) Internationale Veröffentlichungsnummer: WO 2020/007909

(56) Entgegenhaltungen:
- WO-A2-2011/112571
- DE-A1-102006 047 792
- DE-A1-102010 030 093
- US-A1- 2013 176 751
- AOUINI RAOUIA ET AL: "Virtual synchronous generators dynamic performances", 2014 INTERNATIONAL CONFERENCE ON ELECTRICAL SCIENCES AND TECHNOLOGIES IN MAGHREB (CISTEM), IEEE, 3. November 2014 (2014-11-03), Seiten 1-6, XP032755689, DOI: 10.1109/CISTEM.2014.7077025 [gefunden am 2015-04-01]

## Beschreibung

Die vorliegende Erfindung betrifft ein Verfahren zum Bedämpfen niederfrequenter Schwingung, insbesondere subsynchroner Resonanzen in einem elektrischen Versorgungsnetz. Außerdem betrifft die vorliegende Erfindung wenigstens eine dezentrale Erzeugungseinheit zum Durchführen einer solchen Bedämpfung.

Ein elektrisches Versorgungsnetz weist im Allgemeinen eine Netznennfrequenz von 50Hz oder 60Hz auf. Diese Netznennfrequenz kann auch als Systemfrequenz bezeichnet werden. Das elektrische Versorgungsnetz kann vereinfachend und synonym auch als Versorgungsnetz oder Netz bezeichnet werden.

In dem Versorgungsnetz können niederfrequente Schwingungen auftreten, die Frequenzen unterhalb der Netznennfrequenz aufweisen. Diese Schwingungen werden häufig als subsynchrone Resonanzen (SSR) bzw. subsynchrone Frequenzen bezeichnet. Dazu hat das Institute of Electrical and Electronics Engineers (IEEE) im Jahr 1990 eine formale Definition für subsynchrone Resonanz veröffentlicht, nämlich:
*"*Subsynchrone Resonanz ist ein elektrischer Systemzustand, in dem ein Energieaustausch zwischen einem elektrischen Netz und einem Generatorsatz bei einer oder mehreren Eigenfrequenzen des kombinierten Systems stattfindet, die unterhalb der synchronen Frequenz des Systems liegen", P.M. Anderson, B.L. Agrawal, J.E. Van Ness: "Subsynchronous Resonance in Power Systems", IEEE Press 1990

Ein Problem, das in einem Versorgungsnetz auftreten kann, ist, dass die niederfrequenten Schwingungen mechanische Schwingungen von direkt mit dem elektrischen Versorgungsnetz gekoppelten Synchrongeneratoren anregen bzw. verstärken können. Dadurch kann es zu Schäden an den Generatoren kommen. Werden diese zum Schutz vom elektrischen Versorgungsnetz getrennt, kann das zu einer Schwächung des elektrischen Versorgungsnetzes kommen.

Es können auch niederfrequente Pendelschwingungen im Bereich von wenigen Hertz im Versorgungsnetz zwischen Netzabschnitten auftreten, also zum Beispiel eine niederfrequente Schwingung zwischen einem ersten Netzabschnitt in Deutschland und einem zweiten Netzabschnitt in Frankreich. Solche Pendelschwingungen können im Versorgungsnetz auch zu partiellen Netzabschaltungen führen. Im ungünstigen Fall kann dies zu einem Blackout führen.

Dadurch, dass in vielen Ländern der Anteil an Großkraftwerken zurückgeht, während dezentrale, umrichterbasierte Erzeuger wie Windenergieanlagen oder Photovoltaikanlagen ersetzt werden, gewinnen solche dezentralen umrichterbasierten Erzeuger auch zum Stützen des elektrischen Versorgungnetzes an Bedeutung.

Dabei kann sich auch die Struktur des elektrischen Versorgungsnetzes ändern. Auch durch Zu- und Abschaltvorgänge, Wartungsarbeiten an Zuleitungen oder durch den Wettereinfluss, unterliegt das elektrische Versorgungsnetz ständigen Veränderungen. Dazu gehört auch, dass sich Netzkapazitäten und Netzinduktivitäten bzw. Netzimpedanzen insgesamt stetig ändern können. Dies führt dazu, dass sich auch die niederfrequenten Schwingungen kontinuierlich ändern können, was deren Detektion und Bedämpfung schwierig gestaltet.

Da Windparks einen Teil des elektrischen Versorgungsnetzes ausbilden und maßgeblich die Netzeigenschaften mitbestimmen können, können diese somit zur Stabilisierung der Energiesysteme bzw. des Versorgungsnetzes beitragen und als Mittel zur Bedämpfung von ungewünschten subsynchronen Resonanzen eingesetzt werden. Aber auch solche Windparks müssen sich an die geänderten Netzeigenschaften in Bezug auf die niederfrequenten Schwingungen anpassen können.

Das Deutsche Patent- und Markenamt hat in der Prioritätsanmeldung zu vorliegender Anmeldung noch folgenden Stand der Technik recherchiert: DE 10 2006 047 792 A1, US 2018/0159453 A1 und CN 102255325 A.

Das Europäische Patentamt hat zur vorliegenden Anmeldung folgenden Stand der Technik recherchiert: DE 10 2006 047 792 A1, WO 2011/112571 A2, US 2013/0176751 A1, DE 10 2010 030 093 A1 und "Virtual synchronous generators dynamic performances" von Aouini et al. Das Dokument DE 10 2006 047 792 A1 betrifft das Emulieren einer Synchronmaschine zum Einspeisen in ein elektrisches Versorgungsnetz. Das Dokument WO 2011/112571 A2 betrifft ein Verfahren und ein System zur Dämpfung von subsynchronen Resonanzen in einem Energiesystem mit einer Windturbine. Das Dokument US 2013/0176751 A1 betrifft ein Verfahren und eine Vorrichtung zur Steuerung eines Frequenzumrichters einer Windenergieanlage, das bzw. die zur Dämpfung subsynchroner Resonanzen beitragen soll, die im Stromnetz auftreten können. Das Dokument DE 10 2010 030 093 A1 betrifft eine Vorrichtung zum Steuern des Austausches von elektrischer Energie zwischen einem Stromversorgungsnetz und einer elektrischen Anlage, die u.a. ein Umrichtermodul aufweist. Das Dokument Aouini et al. betrifft die dynamische Performance eines virtuellen Synchrongenerators, bei dem ein Umrichter genutzt wird, der ein Verhalten eines Synchrongenerators nachahmt.

Der vorliegenden Erfindung liegt somit die Aufgabe zugrunde, zumindest eines der oben genannten Probleme zu adressieren. Insbesondere soll eine Lösung vorgeschlagen werden, niederfrequente Schwingungen, insbesondere subsynchrone Resonanzen, mittels einer dezentralen Erzeugungseinheit zu bedämpfen, insbesondere eine solche Bedämpfung gegenüber bekannten Verfahren zu verbessern. Zumindest soll zu bisher bekannten Lösungen eine alternative Lösung vorgeschlagen werden.

Erfindungsgemäß wird ein Verfahren gemäß Anspruch 1 vorgeschlagen. Dies ist vorgesehen zum Bedämpfen niederfrequenter Schwingungen, insbesondere subsynchroner Resonanzen, in einem elektrischen Versorgungsnetz. Solche niederfrequenten Schwingungen sind Schwingungen, die eine geringere Frequenz als eine Netznennfrequenz aufweisen. Besonders ist die Frequenz solcher niederfrequenten Schwingungen kleiner als die halbe Netznennfrequenz oder reicht bis zur halben Netznennfrequenz. In einem 50 Hz Netz ist die Frequenz solcher niederfrequenten Schwingungen also vorzugsweise kleiner als 25 Hz und entsprechend ist sie in einem 60 Hz Netz vorzugsweise kleiner als 30 Hz.

Besonders können die niederfrequenten Schwingungen Werte von 1 Hz und weniger aufweisen. Sie können aber auch bis zum fünffachen Wert der Netznennfrequenz reichen. Als niederfrequente Schwingungen werden hier Schwingungen mit einer Frequenz von maximal dem fünffachen Wert der Netznennfrequenz bezeichnet, vorzugsweise mit einer Frequenz die maximal der Netznennfrequenz entspricht. Besonders weist die niederfrequente Schwingung keine Frequenz auf, die einem Vielfachen der Netznennfrequenz entspricht. Es ist zu beachten, dass die Untersuchung und Berücksichtigung niederfrequenter Schwingungen besonders der Untersuchung oder dem Sicherstellen einer Systemstabilität des elektrischen Versorgungsnetzes dient. Das grenzt sich von einer Beurteilung der Netzqualität bzw. Signalqualität des Spannungssignals im elektrischen Versorgungsnetz ab, bei der es besonders auf Oberwellen ankommt.

Das Bedämpfen wird durch wenigstens eine an das elektrische Versorgungsnetz angeschlossene dezentrale Erzeugungseinheit durchgeführt. Eine solche dezentrale Erzeugungseinheit kann insbesondere eine Windenergieanlage oder ein Windpark sein. Ein Windpark umfasst entsprechend mehrere Windenergieanlagen.

Es ist nun vorgesehen, dass elektrische Leistung durch die wenigstens eine Erzeugungseinheit in das elektrische Versorgungsnetz eingespeist wird. Diese Einspeisung wird durch einen Ergänzungsanteil zum Bedämpfen der niederfrequenten Schwingungen ergänzt. Es wird also zusätzlich zu dem ganz normalen Einspeisen elektrischer Leistung somit ein spezieller Ergänzungsanteil vorgesehen, der insbesondere der eingespeisten elektrischen Leistung, die also normal eingespeist wird, überlagert werden kann.

Es wird dazu vorgeschlagen, dass der Ergänzungsanteil in Abhängigkeit eines vereinfachten Modells einer Synchronmaschine bestimmt wird. Hier geht es besonders darum, dass eine Synchronmaschine physikalisch bedingt auf niederfrequente Schwingungen reagiert und diese physikalische Reaktion grundsätzlich so gerichtet ist, dass sie den niederfrequenten Schwingungen entgegenwirken kann. Hierbei geht es besonders um ein physikalisch bedingtes Verhalten das sich ergibt, wenn eine solche Synchronmaschine direkt mit dem elektrischen Versorgungsnetz gekoppelt ist. Es trifft besonders für Synchrongeneratoren zu, die zum Einspeisen elektrischer Leistung direkt mit dem elektrischen Versorgungsnetz gekoppelt sind, wie das üblicherweise bei Großkraftwerken der Fall ist.

Es wurde erkannt, dass diese mögliche bedämpfende Eigenschaft der Synchronmaschine über ein Modell auf eine dezentrale Erzeugungseinheit übertragen werden kann. Dabei wurde erkannt, dass es nicht erforderlich ist, eine Synchronmaschine vollständig zu emulieren, sondern, dass die Verwendung eines vereinfachten Modells zweckmäßiger ist. Dieses vereinfachte Modell kann sich auf diese mögliche bedämpfende Eigenschaft, die ausgenutzt werden soll, beschränken. Es wird also ein solches vereinfachtes Modell einer Synchronmaschine zugrunde gelegt und abhängig davon wird der Ergänzungsanteil bestimmt. Es wird darauf hingewiesen, dass eine Synchronmaschine als Oberbegriff Synchronmotoren und Synchrongeneratoren zusammenfasst. Üblicherweise können Synchrongeneratoren auch als Synchronmotoren arbeiten und umgekehrt. Hier steht die Funktion eines Generators im Vordergrund und Erläuterungen zu Synchrongeneratoren sind hier auch grds. als Erläuterungen zu Synchronmaschinen zu verstehen und umgekehrt.

Ein besonderes Problem beim Bedämpfen niederfrequenter Schwingungen ist, diese niederfrequenten Schwingungen überhaupt zu erfassen. Besonders bei einer Online-Erfassung, die also keine längere Identifikation oder Beobachtung zulässt, kann eine niederfrequente Schwingung zumindest regelmäßig nur sehr ungenau erfasst werden. Wird sie beispielsweise mittels einer Frequenzanalyse bestimmt, kann eine solche Bestimmung vergleichsweise lange dauern, möglicherweise zu lange, um noch sinnvoll eine Bedämpfung vornehmen zu können. Es kommt hinzu, dass sich eine solche niederfrequente Schwingung auch vergleichsweise schnell oder häufig ändern kann.

Wird also zunächst eine zeitaufwändige Erfassung der niederfrequenten Schwingung vorgenommen, kann eine auf die so erfasste niederfrequente Schwingung angepasste Regelung möglicherweise nicht mehr aktuell sein, wenn sie eingesetzt wird, weil die niederfrequente Schwingung sich dann schon verändert haben kann. Aus diesem Grunde wird die Verwendung dieses vereinfachten Modells der Synchronmaschine vorgeschlagen, dass nämlich im Wesentlichen ähnlich zu einer Synchronmaschine auf die niederfrequenten Schwingungen reagiert, ohne dass diese dazu ausdrücklich erkannt oder erfasst werden mussten. Besonders kann das vereinfachte Modell durch eine entsprechende Ersatzschaltung realisiert werden und eine solche Ersatzschaltung reagiert dann unmittelbar auf elektrische Phänomene, ohne dass diese dazu zunächst ausdrücklich erfasst oder bestimmt werden mussten.

Vorzugsweise wird vorgeschlagen, dass der Ergänzungsanteil ein ergänzend eingespeister Strom ist. Somit wird dieser ergänzend eingespeiste Strom in Abhängigkeit des vereinfachten Modells der Synchronmaschine bestimmt und dann entsprechend ergänzend eingespeist. Auch das Einspeisen elektrischer Leistung, also das normale Einspeisen elektrischer Leistung, kann über die Vorgabe eines elektrischen Stroms erfolgen. Der ergänzend eingespeiste Strom kann diesem Strom zum Einspeisen der elektrischen Leistung überlagert werden. Besonders kann vereinfachend davon ausgegangen werden, dass der Strom zum Einspeisen der elektrischen Leistung im Wesentlichen einen konstanten, zumindest quasistationären Effektivwert aufweist, wohingegen der Ergänzungsanteil, also der ergänzend eingespeiste Strom in seinem Effektivwert variieren wird, nämlich so, wie sich durch das vereinfachte Modell ergibt.

Außerdem oder ergänzend wird gemäß einer Ausführungsform vorgeschlagen, dass der Ergänzungsanteil dadurch bestimmt wird, dass dämpfende Eigenschaften der dem vereinfachten Modell zugrundeliegenden Synchronmaschine an Ausgangsklemmen der Erzeugungseinheit emuliert werden. Hier kann besonders eine das vereinfachende Modell repräsentierende Schaltung an den Ausgangsklemmen vorgesehen sein. Diese Ausgangsklemmen können besonders Ausgangsklemmen einer Wechselrichteranordnung sein, über die auch ansonsten in das elektrische Versorgungsnetz eingespeist wird, über die also die elektrische Leistung in das elektrische Versorgungsnetz eingespeist wird. An den Ausgangsklemmen liegt dann auch ein elektrisches Signal des elektrischen Versorgungsnetzes an, bzw. ein dazu repräsentatives Signal.

Von einem repräsentativen Signal ist besonders dann auszugehen, wenn zwischen diesen Ausgangsklemmen und dem elektrischen Versorgungsnetz beispielsweise noch ein Transformator angeordnet ist. Dennoch übertragen sich solche Signale, besonders die Spannung, des elektrischen Versorgungsnetzes auch über einen solchen Transformator an die Ausgangsklemmen. Ist dann dort an den Ausgangsklemmen die elektrische Schaltung zum Emulieren der dämpfenden Eigenschaften der dem vereinfachten Modell zugrundeliegenden Synchronmaschine angeschlossen, wirken auf diese Schaltung diese Signale des elektrischen Versorgungsnetzes bzw. die diese Signale repräsentierenden Signale wirken auf diese Schaltung, die hier auch als Emulationsschaltung bezeichnet werden kann. Die Schaltung reagiert dann unmittelbar auf diese elektrischen Signale und verhält sich zumindest hinsichtlich der dämpfenden Eigenschaften ähnlich der dem vereinfachten Modell zugrundeliegenden Synchronmaschine und kann somit eine Bedämpfung erreichen, ohne dass das Erfassen der niederfrequenten Schwingung erforderlich war.

Es wird vorgeschlagen, dass das vereinfachte Modell der Synchronmaschine eine schwingungsdämpfende Eigenschaft einer Synchronmaschine wiedergibt, insbesondere eine schwingungsdämpfende Eigenschaft eines Dämpferkäfigs einer Synchronmaschine mit Dämpferkäfig. Das vereinfachte Modell ist somit auf die schwingungsdämpfende Eigenschaft der Synchronmaschine fokussiert. Besonders kommt hier die schwingungsdämpfende Eigenschaft eines Dämpferkäfigs in Betracht. Ein Dämpferkäfig ist dem Grunde nach wie der Käfig eines Käfigläufers einer Asynchronmaschine ausgebildet. Auch der Dämpferkäfig ist auf dem drehenden Teil der Synchronmaschine ausgebildet, nämlich dem Rotor, also dem elektrodynamischen Rotor. Der elektrodynamische Rotor kann vereinfachend auch als Läufer bezeichnet werden, um Verwechslungen mit einem aerodynamischen Rotor zu vermeiden.

In einem solchen Dämpferkäfig kann durch die Drehung des Läufers, womit also auch der Dämpferkäfig gedreht wird, in dem Dämpferkäfig ein Strom induziert werden, der seinerseits wiederum ein Magnetfeld aufbaut. Die Besonderheit bei einem solchen Dämpferkäfig, was im Übrigen auch ein Effekt bei einer Asynchronmaschine ist, besteht darin, dass Änderungen im damit elektrisch verbundenen elektrischen Versorgungsnetz, also besonders Spannungsänderungen, in diesem Dämpferkäfig zu Strömen und damit magnetischen Feldern führt, die der auslösenden Änderung durch das elektrische Versorgungsnetz entgegenwirken. Dieser Effekt wird hier ausgenutzt und bildet somit eine schwingungsdämpfende Eigenschaft. Diese schwingungsdämpfende Eigenschaft wird somit durch das vereinfachte Modell der Synchronmaschine ausgenutzt.

Außerdem oder alternativ wird vorgeschlagen, dass schwingungsfähige Komponenten der dem vereinfachten Modell zugrundeliegenden Synchronmaschine nicht oder nur reduziert abgebildet werden. Hier wurde erkannt, dass schwingungsdämpfende Eigenschaften einer Synchronmaschine in dem vereinfachten Modell adaptiert werden können, wobei durch die Verwendung des vereinfachten Modells der Schwerpunkt auf den dämpfenden Eigenschaften liegen kann. Schwingende oder schwingungsfähige Komponenten oder Eigenschaften der Synchronmaschine können weggelassen werden oder sie werden so modifiziert, dass sie weniger schwingen.

Auch hier liegt der Gedanke zugrunde, dass das vereinfachte Modell nicht für die gesamte Einspeisung der elektrischen Leistung verwendet wird, sondern nur zum Bestimmen eines Ergänzungsanteils. Somit braucht insbesondere auch eine Eigenschaft der Synchronmaschine, die sich auf das Einspeisen elektrischer Leistung als Hauptkomponente oder als überwiegender Anteil bezieht, nicht berücksichtigt zu werden. Die Einspeisung elektrischer Leistung, also das normale Einspeisen elektrischer Leistung ohne Berücksichtigung einer Dämpfungseigenschaft bzw. ohne Berücksichtigung des Ergänzungsanteils, kann weiterhin unabhängig von einem Modell einer Synchronmaschine durchgeführt werden. Hierdurch wird somit die Möglichkeit ausgenutzt, von dem Verhalten der Synchronmaschine nur die für die Bedämpfung notwendigen Eigenschaften in das Modell zu übernehmen bzw. in dem Modell abzubilden.

Es wird vorgeschlagen, dass das vereinfachte Modell der Synchronmaschine nur eine schwingungsdämpfende Eigenschaft eines Dämpferkäfigs einer Synchronmaschine mit Dämpferkäfig wiedergibt. Es wird hier also vorgeschlagen, nur diesen Dämpferkäfig in dem Modell umzusetzen bzw. seine Eigenschaften umzusetzen.

Vorzugsweise speist die dezentrale Erzeugungseinheit mittels eines Wechselrichters mit einem Wechselrichterausgang in das elektrische Versorgungsnetz über einen Netzanschlusspunkt ein. Dazu wird vorgeschlagen, dass der Ergänzungsanteil dadurch bestimmt wird, dass ständig wenigstens ein Augenblickswert einer Messspannung an dem Wechselrichterausgang, in dem elektrischen Versorgungsnetz oder an einem anderen Punkt dazwischen, insbesondere an dem Netzanschlusspunkt, aufgenommen und in das vereinfachte Modell der Synchronmaschine eingegeben wird. Als Ergänzungsanteil wird dann eine Reaktion des vereinfachten Modells auf die Augenblickswerte der Messspannung verwendet. Es liegt also ein vereinfachtes Modell zugrunde und das erhält ständig, also insbesondere so oft und so schnell wie eine Abtastrate einer Messspannung das zulässt, aktuelle Messwerte, die an dem Wechselrichterausgang messbar sind. Insoweit ist das vereinfachte Modell so gut wie an diesen Wechselrichterausgang angeschlossen, kann stattdessen aber tatsächlich auch als Modell in einem Mikroprozessor oder Prozessrechner realisiert sein, und dieser Mikroprozessor, oder anders gearteter Prozessrechner kann die Messspannung über die aufgenommenen Augenblickswerte entsprechend als Eingangsgrößen des vereinfachten Modells verwenden.

Die Reaktion des vereinfachten Modells ist dann der Ergänzungsteil und dieser kann hierbei auch als Ausgangsgröße eines Modells in dem Mikroprozessor oder Prozessrechner ausgegeben werden. Hier kommt auch eine digitale Ausgabe in Betracht und damit kann dann die tatsächliche Umsetzung des Ergänzungsanteils ebenfalls durch den Wechselrichter oder einen weiteren Wechselrichter erfolgen. Im Ergebnis kann die gesamte Einspeisung elektrischer Leistung in das elektrische Versorgungsnetz, also einschließlich eines Ergänzungsanteils, durch einen Wechselrichter durchgeführt werden.

Das vereinfachte Modell hilft dabei einen Ergänzungsanteil zum Bedämpfen zu generieren, lässt aber gleichzeitig die vollständige Kontrolle des Einspeisens durch einen Wechselrichter zu. Besonders kann das Einspeisen der elektrischen Leistung, also auch einschließlich des Ergänzungsanteils, über das Einspeisen eines entsprechenden Stromes umgesetzt werden. Dieser Strom setzt sich dann aus einem Anteil für das Einspeisen der elektrischen Leistung, die also nicht zum Bedämpfen vorgesehen ist, und aus dem Ergänzungsanteil zusammen.

Gemäß einer Ausführungsform wird zunächst davon ausgegangen, dass das elektrische Versorgungsnetz eine Netzfrequenz aufweist, was natürlich grundsätzlich immer der Fall sein sollte. Dazu wird dann vorgeschlagen, dass in dem vereinfachten Modell eine Generatorspannung emuliert wird, insbesondere für einen oszillationsfreien Betrieb der dem vereinfachten Modell zugrundeliegenden Synchronmaschine, wenn diese Synchronmaschine mit der Netzfrequenz betrieben wird. Das vereinfachte Modell weist insoweit eine Generatorspannung auf. Diese wird emuliert und zwar in einer derartigen Art und Weise, dass der Betrieb oszillationsfrei ist. Die Generatorspannung wird also so emuliert und wirkt dann entsprechend in dem vereinfachten Modell, dass möglichst ein oszillationsfreier Betrieb resultiert. Dieses Modell mit der so emulierten Generatorspannung reagiert dann mit einem bedämpfenden Signal, wenn entsprechende niederfrequente Schwingungen auftreten, wenn also der idealen sinusförmigen Netzfrequenz solche niederfrequenten Schwingungen überlagert sind.

Im Modell wird ein Verhalten emuliert, bei dem ein Energieaustausch zwischen rotierender Masse und Netz stattfindet. Dieser Energieaustausch ergibt sich aus einer entsprechenden Pendelung, nämlich der Schwingung im Netz. Daher liegt auch eine entsprechende Pendelfrequenz vor. Der emulierte Energieaustausch verursacht, in dem Modell, über einen entsprechenden Ohmschen Anteil, nämlich besonders in dem Dämpferkäfig, eine Verlustleistung. Diese Verlustleistung ist das Dämpfungssignal bzw. wird als Dämpfungssignal ausgegeben und entsprechend kann der Ergänzungsanteil bestimmt und ergänzt, also ergänzend eingespeist werden.

Gemäß einer Ausführungsform wird vorgeschlagen, dass ein Wirkleistungsgrundanteil über eine Wirkleistungssteuerung vorgegeben und eingespeist wird, und dass die Wirkleistungssteuerung von der Bestimmung des Ergänzungsanteils unabhängig arbeitet. Der Wirkleistungsgrundanteil wird also somit von der Bestimmung des Ergänzungsanteils unabhängig vorgegeben und eingespeist. Das kann aber beinhalten, dass eine insgesamt eingespeiste Wirkleistung sich aus diesem Wirkleistungsgrundanteil und dem Ergänzungsanteil oder einem Anteil davon zusammensetzen kann. Aber es sind die normale Wirkleistungseinspeisung und die Einspeisung des Ergänzungsanteils, zumindest jeweils die Bestimmung dieser Größen, voneinander entkoppelt. Die Bedämpfung über das Bestimmen des Ergänzungsanteils kann somit von dem Vorgeben des Wirkleistungsgrundanteils unabhängig durchgeführt werden.

Gemäß einer Ausgestaltung wird vorgeschlagen, dass das Bestimmen und Ergänzen des Ergänzungsanteils in Abhängigkeit der Augenblickswerte der Messspannung so erfolgt, dass sich ein Ergänzungsanteil nur ergibt, wenn die Messspannung von einer sinusförmigen Spannung ohne niederfrequente Spannung abweicht. Hier wird besonders vorgeschlagen, dass sich der Ergänzungsanteil automatisch ergibt, wenn die Messspannung von der sinusförmigen Spannung ohne niederfrequente Schwingung abweicht. Dafür ist besonders gut das vereinfachte Modell einer Synchronmaschine geeignet, das eine gleichförmige Drehbewegung beinhalten kann bzw. berücksichtigen kann und davon abhängig ein Sinussignal erzeugt wird. Ein solches Sinussignal wird nämlich möglichst so erzeugt, dass dieses sinusförmige Signal einer sinusförmigen Spannung entspricht. Besonders entspricht sie einer sinusförmigen Spannung, die an entsprechenden Ausgangsklemmen des Wechselrichters anliegt. Das sinusförmige Signal kann natürlich auch einem entsprechend repräsentativen sinusförmigen Signal entsprechen.

Besonders kommt hier in Betracht, dass die Netzspannung, also die Spannung im elektrischen Versorgungsnetz, gemessen und mit diesem sinusförmigen Signal des vereinfachten Modells verglichen wird. Hier kommt auch in Betracht, dass statt der Netzspannung ein dazu repräsentativer Wert verwendet wird. Das kann bspw. eine Spannung sein, die gegenüber der Netzspannung durch einen Transformator mit bekanntem Übersetzungsverhältnis verändert ist.

Aber auch ein Messsignal, das den Ausgang eines Messwandlers einer Spannungsmessung bildet, kann ein repräsentatives Signal sein. Auch ein entsprechend digitalisiertes Signal zur digitalen Weiterverarbeitung in einem Prozessrechner kommt in Betracht.

Jedenfalls wird dieses sinusförmige Signal des vereinfachten Modells mit der sinusförmigen Spannung verglichen, besonders durch Differenzbildung in einem Mikroprozessor bzw. anderem Prozessrechner. Dabei werden hier jeweils die Augenblickswerte verglichen, also nicht Effektivwerte. Kommt bei diesem Vergleich heraus, dass die Signale gleich sind, ist also die ständige Differenz der Augenblickswerte null, so ergibt sich auch kein Ergänzungsanteil. Ergeben sich aber Abweichungen, so können diese zur Bestimmung eines Ergänzungsanteils verwendet werden. Insoweit ergibt sich dann der Ergänzungsanteil automatisch, weil gemäß dem Beispiel das sinusförmige Signal ständig mit der sinusförmigen Spannung mitläuft und Abweichungen zu dem Ergänzungsanteil führen, ohne dass zunächst ausdrücklich eine niederfrequente Schwingung identifiziert werden muss. Allein die Abweichung von der sinusförmigen Spannung reicht hier aus, um den Ergänzungsanteil zu generieren. Es kann beispielsweise durch eine entsprechende Programmierung oder Verschaltung oder Kombination daraus umgesetzt werden. Besonders ist das Modell so aufgebaut, dass die Abweichungen zu einem emulierten Energieaustausch in dem Modell führen, der zu einer Dämpfung durch Ohmsche Verluste führt und das wird dann aus dem Modell in den Ergänzungsanteil umgesetzt. Besonders wird dieser verlustbehaftete, oszillierende Energieaustausch als Ergänzungsteil zum Einspeisen verwendet, oder der Ergänzungsanteil daraus berechnet, wobei er vorzugsweise proportional zu dem verlustbehafteten, oszillierenden Energieaustausch bzw. den dadurch auftretenden Verlusten ist. Ein solches oszillierendes Einspeisen beinhaltet natürlich auch, dass sich das Vorzeichen des Ergänzungsanteils ändern kann. Das gilt für sämtliche Ausführungsformen.

Gemäß einer Ausführungsform wird vorgeschlagen, dass
- zur Bestimmung des Ergänzungsanteils eine bzw. die Messspannung ständig dreiphasig aufgenommen und in d/q-Komponenten transformiert wird,
- die d/q-Komponenten der Messspannung jeweils an ein d-Teilmodell und ein q-Teilmodell des vereinfachten Modells gegeben werden, wobei das d-Teilmodell das Verhalten einer d-Komponente und das q-Teilmodell das Verhalten einer q-Komponente der dem vereinfachten Modell zugrundeliegenden Synchronmaschine abbildet,
- jeweils eine d- Komponente und eine q-Komponente eines Stromes als Reaktion des d-Teilmodells bzw. des q-Teilmodells auf die d- bzw. q- Komponente der Messspannung aufgenommen bzw. gebildet wird,
- die d- und die q- Komponenten des Stroms in einen dreiphasigen Ergänzungsstrom zurücktransformiert werden und
- der so erhaltene Ergänzungsstrom von der Erzeugungseinheit als Ergänzungsanteil zusätzlich eingespeist wird.

Es wird somit ein vereinfachtes Modell vorgeschlagen, das mit den transformierten d/q-Komponenten arbeitet. Hierdurch können zum einen die drei Phasen der dreiphasigen Messspannung gemeinsam betrachtet werden. Außerdem können die d/q-Komponenten vorteilhaft in einem vereinfachten Modell einer Synchronmaschine berücksichtigt werden, wenn auch dieses vereinfachte Modell die Synchronmaschine in d/q-Komponenten nachbildet. Entsprechend werden die d/q-Komponenten der Messspannung in ein entsprechendes vereinfachtes Modell der Synchronmaschine transformiert, nämlich in das d-Teilmodell bzw. das q-Teilmodell.

Es resultieren dann die d/q-Komponenten eines Stroms und dieser kann zur Dämpfung verwendet werden. Dazu wird er zunächst aus seinen d/q-Komponenten in einen dreiphasigen Ergänzungsstrom zurücktransformiert und dieser dreiphasige Ergänzungsstrom bildet dann den Ergänzungsanteil. Dieser kann einem Wirkleistungsgrundanteil überlagert werden. Es ist zu beachten, dass zum Bestimmen des Wirkleistungsgrundanteils keine Transformation in d/q-Komponenten und wieder zurück vorgenommen werden muss. Der Ergänzungsanteil, besonders der Ergänzungsstrom kann insoweit unabhängig von dem Wirkleistungsgrundanteil bestimmt werden.

Gemäß einer Ausführungsform, die besonders auf der vorstehend beschriebenen aufbaut, davon aber auch abweichen kann, wird vorgeschlagen, dass
- das vereinfachte Modell für eine in d/q-Komponenten transformierte Eingangsspannung, insbesondere Messspannung, einen Längsdämpferwiderstand für eine d-Komponente der transformierten Eingangsspannung und einen Querdämpferwiderstand für eine q-Komponente der transformierten Eingangsspannung aufweist, wobei in dem vereinfachten Modell
- die d-Komponente der transformierten Eingangsspannung an dem Längsdämpferwiderstand anliegt und zu einer ersten Verlustleistung führt, die als Längsleistungssignal aufgenommen wird, und
- die q-Komponente der transformierten Eingangsspannung an dem Querdämpferwiderstand anliegt und zu einer zweiten Verlustleistung führt, die als Querleistungssignal aufgenommen wird, und
- aus dem Längs- und Querleistungssignal der Ergänzungsanteil generiert wird, insbesondere durch Rücktransformation der in d/q-Komponenten gegebenen Längs- und Querleistungssignale in ein dreiphasiges Leistungssignal.

Die Eingangsspannung wird also in d/q-Komponenten transformiert und die d/q-Komponenten wirken dann in einem entsprechenden Modell. Das Modell weist den Längsdämpferwiderstand und den Querdämpferwiderstand auf, dazu kann das Modell besonders auch in zwei Teilmodelle unterteilt sein, nämlich ein Teilmodell für die d-Komponente und ein Teilmodell für die q-Komponente. Diese beiden Teilmodelle können auch als d-Teilmodell und q-Teilmodell, oder als dynamisches Ersatzschaltbild der Längsachse einer Synchronmaschine und als dynamisches Ersatzschaltbild der Querachse einer Synchronmaschine bezeichnet werden bzw. ausgebildet sein.

In jedem der Teilmodelle ergibt sich dann ein entsprechender Verlustleistungsanteil, nämlich an dem Längsdämpferwiderstand und dem Querdämpferwiderstand. Das wird als entsprechendes Signal aufgenommen, nämlich als Längs- und Querleistungssignal, und zurücktransformiert. Es ergibt sich ein dreiphasiges Signal, das dem Ergänzungsanteil entspricht und entsprechend wird dann der Ergänzungsanteil generiert und eingespeist. Der Längsdämpferwiderstand und der Querdämpferwiderstand beschreiben besonders ein Verhalten einer Dämpferwicklung bzw. eines Dämpferkäfigs einer Synchronmaschine.

Dieses Längs- und Querleistungssignal aufzunehmen, kann auch bedeuten, jeweils einen entsprechenden Strom durch den Querleistungswiderstand und den Längsleistungswiderstand zu betrachten. Dann kann der aus diesen beiden Signalen entsprechend zurücktransformierte Strom den Ergänzungsanteil bilden, oder zumindest dazu proportional sein. Dabei ist zu beachten, dass eine Leistungseinspeisung häufig so durchgeführt wird, dass bei gegebener Spannung, nämlich der Netzspannung oder einer äquivalenten Spannung, ein einzuspeisender Strom vorgegeben wird, der proportional zu der einzuspeisenden Leistung ist.

Erfindungsgemäß wird auch eine dezentrale Erzeugungseinheit, insbesondere eine Windenergieanlage oder ein Windpark vorgeschlagen. Eine solche dezentrale Erzeugungseinheit ist dabei vorbereitet zum Einspeisen elektrischer Leistung in ein elektrisches Versorgungsnetz und zum Bedämpfen niederfrequenter Schwingungen, insbesondere subsynchroner Resonanzen, in dem elektrischen Versorgungsnetz. Es wird vorgeschlagen, dass die dezentrale Erzeugungseinheit das Folgende umfasst:
- eine Einspeiseeinheit zum Einspeisen elektrischer Leistung in das elektrische Versorgungsnetz,
- eine Bestimmungseinheit zum Bestimmen eines Ergänzungsanteils zum Bedämpfen der niederfrequenten Schwingungen, wobei die Bestimmungseinheit
- einen Modellabschnitt aufweist und der Modellabschnitt ein vereinfachtes Modell einer Synchronmaschine aufweist, um den Ergänzungsanteil in Abhängigkeit des vereinfachten Modells der Synchronmaschine zu bestimmen, und wobei
- die dezentrale Erzeugungseinheit, insbesondere die Einspeiseeinheit, dazu vorbereitet ist, den Ergänzungsanteil zusätzlich in das elektrische Versorgungsnetz einzuspeisen, um die niederfrequenten Schwingungen zu bedämpfen.

Die dezentrale Erzeugungseinheit weist somit neben einer Einspeiseeinheit zum Einspeisen elektrischer Leistung in das elektrische Versorgungsnetz eine Bestimmungseinheit auf, die einen Ergänzungsanteil zum Bedämpfen der niederfrequenten Schwingungen bestimmt. Dazu weist sie einen Modellabschnitt auf mit einem vereinfachten Modell einer Synchronmaschine. Mithilfe dieses vereinfachten Modells wird der Ergänzungsanteil bestimmt und kann von der dezentralen Erzeugungseinheit ebenfalls in das elektrische Versorgungsnetz eingespeist werden. Die Einspeisung kann dabei so erfolgen, dass die Einspeiseeinheit sowohl die elektrische Leistung, also insbesondere einen Wirkleistungsgrundanteil einspeist, als auch den Ergänzungsanteil. Dies beides kann in einem gemeinsamen eingespeisten Strom überlagert sein.

Insbesondere wird vorgeschlagen, dass die dezentrale Erzeugungseinheit so arbeitet, wie vorstehend gemäß wenigstens einer Ausführungsform eines Verfahrens zum Bedämpfen niederfrequenter Schwingungen erläutert wurde.

Insbesondere wird vorgeschlagen, dass eine Steuereinheit vorgesehen ist, auf der ein solches Verfahren implementiert ist. Eine solche Steuereinheit kann die Bestimmungseinheit zum Bestimmen des Ergänzungsanteils beinhalten. Die Steuereinheit kann als Prozessrechner ausgebildet sein.

Vorzugsweise ist ein Wechselrichter vorgesehen, insbesondere als Einspeiseeinheit, der einen Wechselrichterausgang aufweist, um darüber über einen Netzanschlusspunkt in das elektrische Versorgungsnetz einzuspeisen. Weiterhin wird vorgeschlagen, dass eine Messeinheit vorgesehen ist, zum Erfassen einer Messspannung an dem Wechselrichterausgang, in dem elektrischen Versorgungsnetz, oder an einem anderen Punkt dazwischen, insbesondere an dem Netzanschlusspunkt, um diese Messspannung in das vereinfachte Modell der Synchronmaschine einzugeben. Der Ergänzungsanteil wird dann dadurch bestimmt, dass ständig wenigstens ein Augenblickswert der Messspannung in das vereinfachte Modell der Synchronmaschine eingegeben wird und als Ergänzungsanteil eine Reaktion des vereinfachten Modells auf die Augenblickswerte der Messspannung verwendet wird.

Über die Messeinheit kann somit die Spannung im elektrischen Versorgungsnetz bzw. ein repräsentativer Wert dazu erfasst werden und dann kann davon abhängig der Ergänzungsanteil zum Bedämpfen möglicher niederfrequenter Schwingungen unmittelbar bestimmt werden. Dadurch ist es möglich, auf die Netzspannung unmittelbar zu reagieren und die Art und Weise, wie das zu erfolgen hat, kann über das vereinfachte Modell der Synchronmaschine vorgegeben werden.

Auch hier wird erreicht, dass über diese unmittelbare Eingabe dieser Messspannung oder entsprechenden Messgröße in das vereinfachte Modell ein Ergänzungsanteil zum Bedämpfen erzeugt werden kann, ohne dass eine ausdrückliche Erkennung oder Identifizierung einer niederfrequenten Schwingung durchgeführt werden muss. Dadurch kann auch der gesamte Vorgang und damit die Erzeugungseinheit zum Bedämpfen kontinuierlich und online arbeiten.

Es wird vorzugsweise auch vorgeschlagen, dass die Bestimmungseinheit, insbesondere der Modellabschnitt und/oder sein vereinfachtes Modell
- eine Transformationseinheit aufweist, um zur Bestimmung des Ergänzungsanteils eine bzw. die ständig dreiphasig aufgenommene Messspannung in d/q-Komponenten zu transformieren,
- ein d-Teilmodell und ein q-Teilmodell des vereinfachten Modells aufweist, wobei die d/q-Komponenten der Messspannung jeweils an das d-Teilmodell bzw. das q-Teilmodell des vereinfachten Modells gegeben werden, wobei das d-Teilmodell das Verhalten einer d-Komponente und das q-Teilmodell das Verhalten einer q-Komponente der dem vereinfachten Modell zugrundeliegenden Synchronmaschine abbildet,
- ein Aufnahmeabschnitt aufweist, um jeweils eine d-Komponente und eine q-Komponente eines Stromes als Reaktion des d-Teilmodells bzw. des q-Teilmodells auf die d- bzw. q- Komponente der Messspannung aufzunehmen bzw. zu bilden,
- eine Rücktransformationseinheit aufweist, um die d- und die q- Komponenten des Stroms in einen dreiphasigen Ergänzungsstrom zurück zu transformieren und
- die Erzeugungseinheit dazu vorbereitet ist, dass der so erhaltene Ergänzungsstrom von der Erzeugungseinheit als Ergänzungsanteil zusätzlich eingespeist wird.

Die Bestimmungseinheit, insbesondere der Modellabschnitt bzw. sein vereinfachtes Modell arbeiten insbesondere so bzw. weisen solche Strukturen auf, wie sich aus den Erläuterungen zu wenigstens einer Ausführungsform eines vorstehend beschriebenen Verfahrens zum Bedämpfen niederfrequenter Schwingungen ergibt. Besonders kann in der Bestimmungseinheit bzw. dem Modellabschnitt oder dem vereinfachten Modell ein solches Modell hinterlegt oder implementiert sein, das eine Transformation einer Messspannung oder repräsentativen Größe in d/q-Komponenten durchführt. Des Weiteren ist dort vorgesehen, dass die d/q-Komponenten der Messspannung jeweils an ein d-Teilmodell bzw. ein q-Teilmodell gegeben werden, wobei das d-Teilmodell das Verhalten einer d-Komponente und das q-Teilmodell das Verhalten einer q-Komponente abbildet. Weiterhin ist vorgesehen, dass jeweils eine d-Komponente und eine q-Komponente eines Stroms als Reaktion des d-Teilmodells bzw. q-Teilmodells auf die d- bzw. q-Komponente der Messspannung aufgenommen bzw. gebildet wird. Das kann auch jeweils Teil des d-Teilmodells bzw. q-Teilmodells sein. Weiterhin ist vorgesehen, dass die d- und die q-Komponenten des Stroms in einen dreiphasigen Ergänzungsstrom zurücktransformiert werden und der so enthaltene Ergänzungsstrom von der Erzeugungseinheit als Ergänzungsanteil zusätzlich eingespeist werden kann.

Die Erfindung wird nun nachfolgend anhand von Ausführungsformen unter Bezugnahme auf die begleitenden Figuren exemplarisch näher erläutert.
- Figur 1: zeigt eine Windenergieanlage in einer perspektivischen Darstellung.
- Figur 2: zeigt einen Windpark in einer schematischen Darstellung.
- Figur 3: zeigt ein dynamisches Ersatzschaltbild der Längsachse einer Synchronmaschine mit Dämpferwicklung.
- Figur 4: zeigt ein dynamisches Ersatzschaltbild der Querachse einer Synchronmaschine mit Dämpferwicklung.

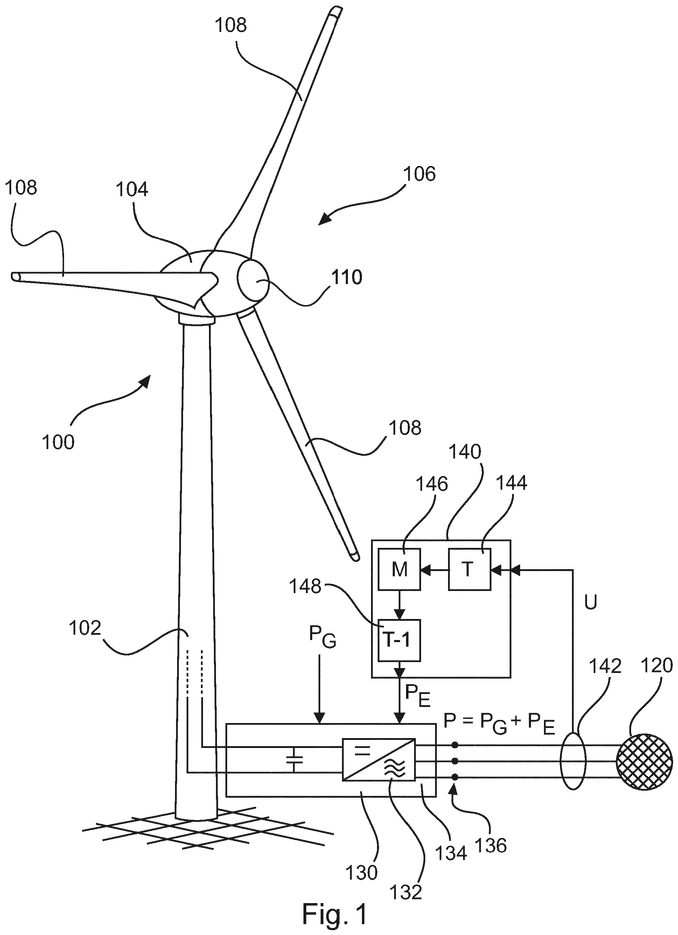

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Zum Einspeisen elektrischer Leistung in ein elektrisches Versorgungsnetz 120 weist die Windenergieanlage eine Einspeiseeinheit 130 auf. Diese kann einen Wechselrichter 132 aufweisen, der an einem Wechselrichterausgang 134 elektrische Leistung abgeben kann, besonders durch Abgabe eines dreiphasigen Stroms. Der Wechselrichterausgang 134 kann mit Ausgangsklemmen 136 verbunden sein, die den Ausgang der Einspeiseeinheit 130 und damit auch der Windenergieanlage 100 bilden können. Die Windenergieanlage 100 bildet somit auch eine dezentrale Erzeugungseinheit. Die Ausgangsklemmen 136 können, wie in Figur 1 vereinfacht dargestellt, unmittelbar mit dem elektrischen Versorgungsnetz 120 verbunden sein, oder es können weitere Elemente wie ein Trennschalter und/oder ein Transformator dazwischen angeordnet sein.

Zum Bestimmen eines Ergänzungsanteils ist eine Bestimmungseinheit 140 vorgesehen. Diese Bestimmungseinheit kann als Eingangsgröße Augenblickswerte der Spannung des elektrischen Versorgungsnetzes erhalten, die hier exemplarisch durch das angedeutete Messmittel 142 aufgenommen werden und in die Bestimmungseinheit 140 eingegeben werden. Zur Veranschaulichung werden diese Augenblickswerte, die alle drei Phasen betreffen, als U angezeigt. In der gezeigten Ausführungsform werden diese so erfassten Werte zunächst auf eine Transformationseinheit 144 gegeben. Diese führt eine Transformation in d/q-Komponenten durch, um diese dann in einem Modellabschnitt 146, in dem das vereinfachte Modell implementiert sein kann, auszuwerten, um schließlich eine q-Komponente eines Stroms und eine d-Komponente eines Stroms als Reaktion von dem Modellabschnitt 146, in dem das vereinfachte Modell implementiert ist, zu erhalten. Dieses Ergebnis kann durch einen Aufnahmeabschnitt aufgenommen werden, der hier Teil des Modellabschnitts 146 ist.

Die so erhaltenen Komponenten des Stroms auf die Reaktion des vereinfachten Modells, das im Modellabschnitt 146 implementiert ist, werden dann auf eine Rücktransformationseinheit 148 gegeben und das Ergebnis kann dann ein Ergänzungsanteil P_{E} sein, der dann als Wert an die Einspeiseeinheit 130 zur Umsetzung gegeben wird. Hier ist als Ergänzungsanteil P_{E} eine Leistung angedeutet. Stattdessen kann aber auch ein Strom, also ein Sollwert für einen Strom, besonders einschließlich Phasenlage, ausgegeben und an die Einspeiseeinheit 130 übergeben werden.

Die Einspeiseeinheit 130 erhält somit durch diesen Ergänzungsanteil einen Sollwert eines einzuspeisenden Ergänzungsanteils. Dieser Ergänzungsanteil dient dazu, etwaige niederfrequente Schwingungen im elektrischen Versorgungsnetz zu bedämpfen.

Zum Steuern der eigentlichen Einspeisung elektrischer Leistung, unabhängig von notwendigen oder gewünschten Bedämpfungen, kann der Wirkleistungsgrundanteil P_{G} vorgegeben werden. Die Einspeiseeinheit 130, insbesondere der Wechselrichter 132 erzeugt dann eine Ausgabeleistung bzw. einen entsprechenden Strom, die der Summe dieses Wirkleistungsgrundanteils P_{G} und des Ergänzungsanteils P_{E} entsprechen kann. Es ist dabei aber zu beachten, dass zumindest der Ergänzungsanteil P_{E} als sich ändernde Größe anzunehmen ist. Besonders kann sie mit einer Frequenz schwingen, die der Frequenz der zu bedämpfenden niederfrequenten Schwingung entsprechen kann, um ein anschauliches Beispiel zu geben. Es kommt aber auch in Betracht, dass die niederfrequente Schwingung mehrere niederfrequente Schwingungsanteile aufweist, nämlich mit unterschiedlichen Frequenzen, die selbst aber auch jeweils niederfrequent sind, also insbesondere kleiner als halb so groß sind wie die Netznennfrequenz.

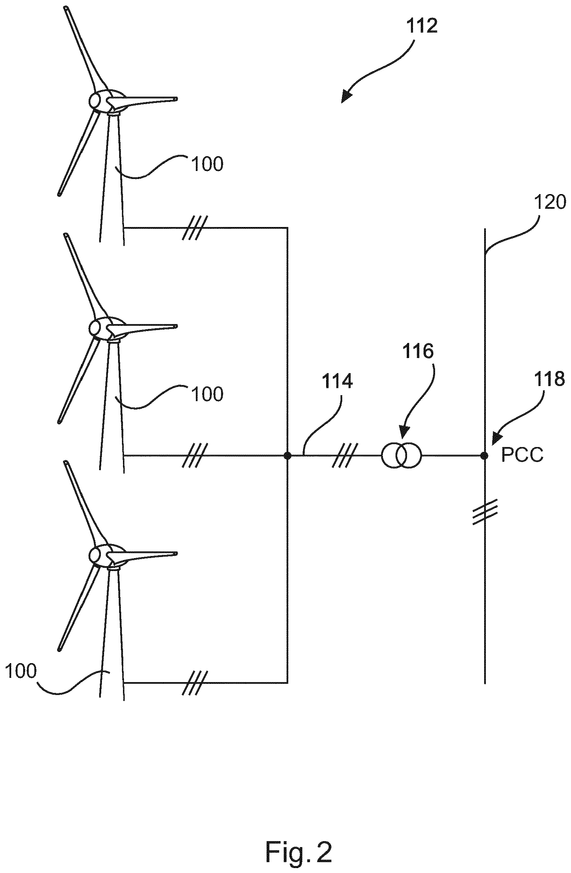

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

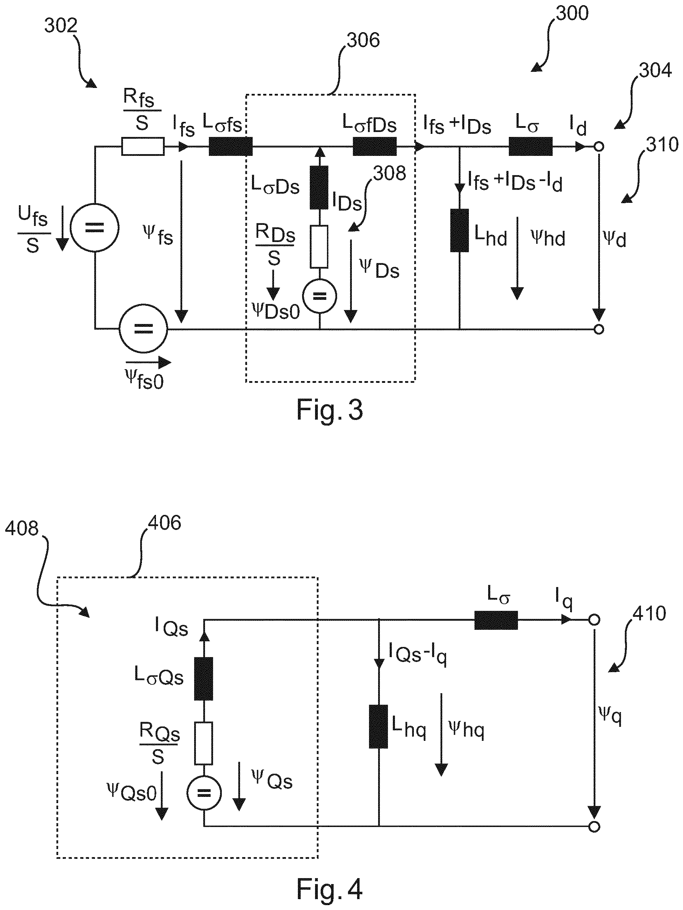

Figuren 3 und 4 zeigen jeweils ein dynamisches Ersatzschaltbild, nämlich der Längsachse einer Synchronmaschine mit Dämpferwicklung gemäß Figur 3 und der Querachse der Synchronmaschine mit Dämpferwicklung gemäß Figur 4.

Figur 3 zeigt somit das dynamische Ersatzschaltbild der Längsachse, das hier vereinfachend als Längsersatzschaltbild 300 bezeichnet wird, wohingegen das dynamische Ersatzschaltbild der Querachse gemäß Figur 4 vereinfachend als Querersatzschaltbild 400 bezeichnet wird. In dem Längsersatzschaltbild 300 wird in einem Rotorabschnitt 302 das Verhalten der Synchronmaschine im Wesentlichen durch einen transformierten Widerstand der Feldwicklung R_{fs/s}, eine Spannungsquelle einer transformierten Erregerspannung U_{fs/s}, eine Spannungsquelle eines verketteten Flusses Ψ_{fs0} und die Streuinduktivität L_{σfs} wiedergegeben. Vereinfachend kann auch die ebenfalls eingezeichnete Flussverkettung Ψ_{fs0} als linke Eingangsgröße verwendet werden.

Außerdem ist ein Statorabschnitt 304 angegeben. Dieser Statorabschnitt 304, der somit auf die Längskomponente des Synchrongeneratormodells gerichtet ist, weist im Wesentlichen eine Streuinduktivität L_{σ} und eine Hauptinduktivität L_{hd} der Längskomponente auf. An ihr ergibt sich entsprechend die Hauptflussverkettung Ψ_{hd}.

Außerdem ist noch ein Dämpferabschnitt in diesen Längsersatzschaltbild 300 vorgesehen, der hier als Längsdämpferabschnitt 306 bezeichnet wird. Der Längsdämpferabschnitt 306 weist einen Dämpferschenkel 308 auf, der eine Längsdämpferinduktivität L_{σDs}, einen transformierten Längsdämpferwiderstand R_{Ds/s} und eine Spannungsquelle einer Dämpferflussverkettung Ψ_{Ds0} aufweist. Außerdem ist eine Längsdämpferstreuinduktivität L_{σfDs} vorgesehen.

Ein solches Ersatzschaltbild einschließlich der eingezeichneten Ströme ist grundsätzlich bekannt und hier ist besonders der Längsdämpferabschnitt 306 relevant und soll in einem vereinfachten Modell verwendet werden. Dieser Längsdämpferabschnitt 306 kann im Grunde in bekannter Art und Weise zu einer Bedämpfung führen, die sich besonders für ein Signal einstellen kann, das an dem Längseingang 310 anliegen kann. Dort kann also dann im Ergebnis auch eine dämpfende Wirkung für eine Eingangsgröße erreicht werden, die der dort dargestellten Flussverkettung Ψ_{d} entspricht.

Das Querersatzschaltbild 400 der Figur 4 weist somit keinen Rotorabschnitt auf und das Ersatzschaltbild beschränkt sich im Wesentlichen auf die Querhauptinduktivität L_{hq} und die Streuinduktivität L_{σ}. Außerdem ist ein Querdämpferabschnitt 406 vorhanden, der im Grunde nur einen Dämpferschenkel 408 aufweist, in dem die Querdämpferinduktivität L_{σQs}, der transformierte Querdämpferwiderstand R_{Qs/s} und eine Spannungsquelle einer verketteten Querdämpferfluss Ψ_{Qs0} vorhanden ist. Auch hier geht es im Wesentlichen darum, die Eigenschaft des Dämpferabschnitts, nämlich hier des Querdämpferabschnitts 406 zum Bedämpfen auszunutzen. Dafür kann im Grunde ein entsprechendes Signal am Quereingang 410 angelegt werden, nämlich dort, wo in Figur 4 die Querflussverkettung Ψ_{q} eingezeichnet ist.

Das Längsersatzschaltbild 300 und das Querersatzschaltbild 400 bilden insoweit auch ein d-Teilmodell bzw. ein q-Teilmodell und zusammen ein gesamtes Modell. Zur Verwendung, um einen Ergänzungsteil zu bestimmen, können diese beiden Teilmodelle wie folgt zum Einsatz kommen. Ein Messsignal, wie es beispielsweise mit dem Messmittel 142 der Figur 1 aufgenommen wurde, kann zunächst in eine d- und eine q-Komponente transformiert werden. Die d-Komponente kann dann am Längseingang 310 angelegt werden und die q-Komponente am Quereingang 410. In beiden Fällen ergibt sich in den beiden Ersatzschaltbildern eine Reaktion, im Ergebnis nämlich auch ein Strom, wie der Längsstrom I_{d} im Längsersatzschaltbild 300 und der Querstrom I_{q} im Querersatzschaltbild 400.

Diese Ströme stellen sich dann entsprechend an dem Längseingang 310 bzw. Quereingang 410 ein und können zusammen zurücktransformiert werden, so dass sich aus diesen resultierenden d- und q-Komponenten ein gemeinsamer Wert ergibt, nämlich insbesondere ein Ergänzungsanteil, wie er in Figur 1 als Ergänzungsanteil P_{E} angezeigt ist. Mit diesem Ergänzungsanteil P_{E} kann dann eine Bedämpfung vorgenommen werden, nämlich besonders von niederfrequenten Schwingungen.

Die wesentliche Dämpfungseigenschaft ergibt sich hier besonders aus einer über die beiden Widerstände R_{Ds} und R_{Qs} ausgekoppelten Leistung, welche bei einem tatsächlichen Dämpferkäfig, der hier im Grunde emuliert wird, in Wärme umgewandelt wird. Diese Leistung wird dem Wechselrichtersignal als Ergänzungsanteil aufmoduliert.

Solche niederfrequenten Schwingungen können über die beschriebene Anwendung der Transformation in d- und q-Komponenten und Anwendung auf das entsprechende Ersatzschaltbild und Rücktransformation der sich ergebenden d- und q-Komponenten gut bedämpft werden. Das liegt daran, dass, was erfindungsgemäß erkannt wurde, sich ein solches Dämpferverhalten eines Dämpferkäfigs für eine solche Dämpfung solcher niederfrequenten Schwingungen eignet. Entsprechend wurde der Vorschlag gemacht. Diese beiden Ersatzschaltbilder, also das Längsersatzschaltbild 300 und das Querersatzschaltbild 400, dienen somit als vereinfachtes Modell. Die Vereinfachung liegt besonders auch darin, dass weitere Elemente, wie beispielsweise weitere Streuinduktivitäten nicht berücksichtigt wurden. Auch kann eine Vereinfachung darin bestehen, dass die transformierte Spannung U_{fs/s} als auch die Flussverkettungen, besonders Ψ_{fs0}, Ψ_{Ds0} und Ψ_{Qs0} als konstante Werte vorgegeben werden.

Auch die Transformation in d- und q-Komponenten berücksichtigt eine Drehzahl der modulierten Synchronmaschine. Diese Drehzahl kann als konstanter Wert vorgegeben werden. Dadurch kann im Ergebnis auch erreicht werden bzw. ein entsprechender Effekt erreicht werden, dass nur Abweichungen von einem zu dieser Drehzahl gehörenden Sinusfunktion hinsichtlich einer dämpfenden Reaktion Auswirkungen haben. Eine theoretisch ideale Sinusfunktion mit konstanter Frequenz, die nämlich der angenommenen Drehzahl der betrachteten Synchronmaschine entspricht, führt nach der Transformation in d- und q-Komponenten zu einem festen Wert an den jeweiligen Eingängen, also am Längseingang 310 und Quereingang 410. Bei gleichzeitig konstanten Werten der transformierten Spannung U_{fs/s} und der genannten Flussverkettungen stellt sich dann auch keine Reaktion in Form eines entsprechenden Stroms ein. Eine Reaktion stellt sich dann nur für Abweichungen und damit besonders für niederfrequente Schwingungen ein.

Erläuterungen zu Ersatzschaltbildern einer Synchronmaschine mit Dämpferkäfig finden sich auch in dem Lehrbuch von V. Crastan, "Elektrische Energieversorgung 1, Netzelemente, Modellierung, stationäres Verhalten, Bemessung, Schalt- und Schutztechnik", 4. Auflage, Springer Verlag Berlin Heidelberg, 2015, Seiten 247, 248.

## Patentansprüche

1. Verfahren zum Bedämpfen niederfrequenter Schwingungen, insbesondere subsynchroner Resonanzen, in einem elektrischen Versorgungsnetz (120) durch wenigstens eine an das elektrische Versorgungsnetz (120) angeschlossene dezentrale Erzeugungseinheit (100, 112), insbesondere eine Windenergieanlage (100) oder ein Windpark (112), umfassend die Schritte:
- Einspeisen elektrischer Leistung (P) durch die wenigstens eine Erzeugungseinheit (100,112) und
- Ergänzen der Einspeisung durch einen Ergänzungsanteil (P_{E}) zum Bedämpfen der niederfrequenten Schwingungen, wobei
- der Ergänzungsanteil (P_{E}) in Abhängigkeit eines vereinfachten Modells (300, 400) einer Synchronmaschine bestimmt wird, wobei
- das vereinfachte Modell (300, 400) der Synchronmaschine die schwingungsdämpfende Eigenschaft einer Synchronmaschine wiedergibt, nämlich die schwingungsdämpfende Eigenschaft eines Dämpferkäfigs einer Synchronmaschine mit Dämpferkäfig,
- schwingungsfähige Komponenten der dem vereinfachten Modell (300, 400) zugrundeliegenden Synchronmaschine nicht oder nur reduziert abgebildet werden, und
- das vereinfachte Modell (300, 400) der Synchronmaschine nur die schwingungsdämpfende Eigenschaft eines Dämpferkäfigs einer Synchronmaschine mit Dämpferkäfig wiedergibt.

2. Verfahren nach Anspruch 1, **dadurch gekennzeichnet, dass**
- der Ergänzungsanteil (P_{E}) ein ergänzend eingespeister Strom ist, und/oder dass
- der Ergänzungsanteil (P_{E}) dadurch bestimmt wird, dass dämpfende Eigenschaften der dem vereinfachten Modell (300, 400) zugrundeliegenden Synchronmaschine an Ausgangsklemmen (136) der Erzeugungseinheit (100, 112) emuliert werden.

3. Verfahren nach Anspruch 1 oder 2, **dadurch gekennzeichnet, dass**
- die dezentrale Erzeugungseinheit (100, 112) mittels eines Wechselrichters (132) mit einem Wechselrichterausgang (134) in das elektrische Versorgungsnetz (120) über einen Netzanschlusspunkt (118) einspeist,
- der Ergänzungsanteil (P_{E}) dadurch bestimmt wird, dass ständig wenigstens ein Augenblickswert einer Messspannung an dem Wechselrichterausgang (134), in dem elektrischen Versorgungsnetz (120), oder an einem anderen Punkt dazwischen, insbesondere an dem Netzanschlusspunkt (118), aufgenommen und in das vereinfachte Modell (300, 400) der Synchronmaschine eingegeben wird und
- als Ergänzungsanteil (P_{E}) eine Reaktion des vereinfachten Modells (300, 400) auf die Augenblickswerte der Messspannung (U) verwendet wird.

4. Verfahren nach Anspruch 3, **dadurch gekennzeichnet, dass**
- das elektrische Versorgungsnetz (120) eine Netzfrequenz aufweist und
- in dem vereinfachten Modell (300, 400) eine Generatorspannung emuliert wird, insbesondere für einen oszillationsfreien Betrieb der dem vereinfachten Modell (300, 400) zugrundeliegenden Synchronmaschine, wenn diese mit der Netzfrequenz betrieben wird.

5. Verfahren nach einem der vorstehenden Ansprüche, **dadurch gekennzeichnet, dass**
- ein Wirkleistungsgrundanteil (P_{G}) über eine Wirkleistungssteuerung vorgegeben und eingespeist wird, und
- die Wirkleistungssteuerung von der Bestimmung des Ergänzungsanteils (P_{E}) unabhängig arbeitet.

6. Verfahren nach einem der vorstehenden Ansprüche, **dadurch gekennzeichnet, dass**
- das Bestimmen und Ergänzen des Ergänzungsanteils (P_{E}) in Abhängigkeit der Augenblickswerte einer bzw. der Messspannung (U) so erfolgt, dass sich ein Ergänzungsanteil (P_{E}) nur ergibt, wenn die Messspannung (U) von einer sinusförmigen Spannung ohne niederfrequente Schwingung abweicht, insbesondere, dass
- sich der Ergänzungsanteil (P_{E}) automatisch ergibt, wenn die Messspannung (U) von der sinusförmigen Spannung ohne niederfrequente Schwingung abweicht.

7. Verfahren nach einem der vorstehenden Ansprüche, **dadurch gekennzeichnet, dass**
- zur Bestimmung des Ergänzungsanteils (P_{E}) eine bzw. die Messspannung (U) ständig dreiphasig aufgenommen und in d/q-Komponenten transformiert wird,
- die d/q-Komponenten der Messspannung jeweils an ein d-Teilmodell (300) und ein q-Teilmodell (400) des vereinfachten Modells (300, 400) gegeben werden, wobei das d-Teilmodell (300) das Verhalten einer d-Komponente und das q-Teilmodell (400) das Verhalten einer q-Komponente der dem vereinfachten Modell (300, 400) zugrundeliegenden Synchronmaschine abbildet,
- jeweils eine d- Komponente und eine q-Komponente eines Stromes als Reaktion des d-Teilmodells (300) bzw. des q-Teilmodells (400) auf die d- bzw. q-Komponente der Messspannung (U) aufgenommen bzw. gebildet wird,
- die d- und die q- Komponenten des Stroms in einen dreiphasigen Ergänzungsstrom zurücktransformiert werden und
- der so erhaltene Ergänzungsstrom von der Erzeugungseinheit als Ergänzungsanteil zusätzlich eingespeist wird.

8. Verfahren nach einem der vorstehenden Ansprüche, **dadurch gekennzeichnet, dass**
- das vereinfachte Modell (300, 400) für eine in d/q-Komponenten transformierte Eingangsspannung (U), insbesondere Messspannung (U), einen Längsdämpferwiderstand (R_{DS/s}) für eine d-Komponente der transformierten Eingangsspannung (U) und einen Querdämpferwiderstand (R_{Qs/s}) für eine q-Komponente der transformierten Eingangsspannung (U) aufweist, wobei in dem vereinfachten Modell
- die d-Komponente der transformierten Eingangsspannung (U) an dem Längsdämpferwiderstand (R_{Ds/s}) anliegt und zu einer ersten Verlustleistung führt, die als Längsleistungssignal aufgenommen wird, und
- die q-Komponente der transformierten Eingangsspannung (U) an dem Querdämpferwiderstand (R_{Qs/s}) anliegt und zu einer zweiten Verlustleistung führt, die als Querleistungssignal aufgenommen wird, und
- aus dem Längs- und Querleistungssignal der Ergänzungsanteil generiert wird, insbesondere durch Rücktransformation der in d/q-Komponenten gegebenen Längs- und Querleistungssignale in ein dreiphasiges Leistungssignal.

9. Dezentrale Erzeugungseinheit (100, 112), insbesondere Windenergieanlage (100) oder Windpark (112), zum Einspeisen elektrischer Leistung (P) in ein elektrisches Versorgungsnetz (120) und zum Bedämpfen niederfrequenter Schwingungen, insbesondere subsynchroner Resonanzen, in dem elektrischen Versorgungsnetz (120), umfassend
- eine Einspeiseeinheit (130) zum Einspeisen elektrischer Leistung (P) in das elektrische Versorgungsnetz (120),
- eine Bestimmungseinheit (140) zum Bestimmen eines Ergänzungsanteils (P_{E}) zum Bedämpfen der niederfrequenten Schwingungen, wobei die Bestimmungseinheit (140)
- einen Modellabschnitt (146) aufweist und der Modellabschnitt (146) ein vereinfachtes Modell (300, 400) einer Synchronmaschine aufweist, um den Ergänzungsanteil (P_{E}) in Abhängigkeit des vereinfachten Modells (300, 400) der Synchronmaschine zu bestimmen, und wobei
- die dezentrale Erzeugungseinheit (100, 112), insbesondere die Einspeiseeinheit (130), dazu vorbereitet ist, den Ergänzungsanteil (P_{E}) zusätzlich in das elektrische Versorgungsnetz (120) einzuspeisen, um die niederfrequenten Schwingungen zu bedämpfen, wobei
- das vereinfachte Modell (300, 400) der Synchronmaschine die schwingungsdämpfende Eigenschaft einer Synchronmaschine wiedergibt, nämlich die schwingungsdämpfende Eigenschaft eines Dämpferkäfigs einer Synchronmaschine mit Dämpferkäfig,
- schwingungsfähige Komponenten der dem vereinfachten Modell (300, 400) zugrundeliegenden Synchronmaschine nicht oder nur reduziert abgebildet werden, und
- das vereinfachte Modell (300, 400) der Synchronmaschine nur die schwingungsdämpfende Eigenschaft eines Dämpferkäfigs einer Synchronmaschine mit Dämpferkäfig wiedergibt...

10. Dezentrale Erzeugungseinheit (100, 112) nach Anspruch 9, **dadurch gekennzeichnet, dass** sie ein Verfahren nach einem der Ansprüche 1 bis 8 verwendet, insbesondere dass eine Steuereinheit (130, 140) vorgesehen ist, auf der ein solches Verfahren implementiert ist.

11. Dezentrale Erzeugungseinheit (100, 112) nach einem der Ansprüche 9 oder 10, **dadurch gekennzeichnet, dass**
- ein Wechselrichter (132) vorgesehen ist, insbesondere als Einspeiseeinheit (130), und der Wechselrichter (132) einen Wechselrichterausgang (134) aufweist, um darüber über einen Netzanschlusspunkt (118) in das elektrische Versorgungsnetz (120) einzuspeisen,
- eine Messeinheit (142) vorgesehen ist zum Erfassen einer Messspannung (U) an dem Wechselrichterausgang (134) in dem elektrischen Versorgungsnetz (120), oder an einem anderen Punkt dazwischen, insbesondere an dem Netzanschlusspunkt (118), um diese Messspannung (U) in das vereinfachte Modell (300, 400) der Synchronmaschine einzugeben, so dass
- der Ergänzungsanteil (P_{E}) dadurch bestimmt wird, dass ständig wenigstens ein Augenblickswert der Messspannung (U) in das vereinfachte Modell (300, 400) der Synchronmaschine eingegeben wird und
- als Ergänzungsanteil (P_{E}) eine Reaktion des vereinfachten Modells (300, 400) auf die Augenblickswerte der Messspannung (U) verwendet wird.

12. Dezentrale Erzeugungseinheit (100, 112) nach einem der Ansprüche 9 bis 11, **dadurch gekennzeichnet, dass** die Bestimmungseinheit (140), insbesondere der Modellabschnitt (146) und/oder sein vereinfachtes Modell (300, 400)
- eine Transformationseinheit (144) aufweist, um zur Bestimmung des Ergänzungsanteils (P_{E}) eine bzw. die ständig dreiphasig aufgenommene Messspannung (U) in d/q-Komponenten zu transformieren,
- ein d-Teilmodell (300) und ein q-Teilmodell (300) des vereinfachten Modells (300, 400) aufweist, wobei die d/q-Komponenten der Messspannung (U) jeweils an das d-Teilmodell (300) bzw. das q-Teilmodell (300) des vereinfachten Modells (300, 400) gegeben werden, wobei das d-Teilmodell (300) das Verhalten einer d-Komponente und das q-Teilmodell (400) das Verhalten einer q-Komponente der dem vereinfachten Modell (300, 400) zugrundeliegenden Synchronmaschine abbildet,
- einen Aufnahmeabschnitt aufweist, um jeweils eine d- Komponente und eine q-Komponente eines Stromes als Reaktion des d-Teilmodells (300) bzw. des q-Teilmodells (400) auf die d- bzw. q- Komponente der Messspannung (U) aufzunehmen bzw. zu bilden,
- eine Rücktransformationseinheit (148) aufweist, um die d- und die q- Komponenten des Stroms in einen dreiphasigen Ergänzungsstrom zurück zu transformieren und
- die Erzeugungseinheit (100, 112) dazu vorbereitet ist, dass der so erhaltene Ergänzungsstrom von der Erzeugungseinheit als Ergänzungsanteil zusätzlich eingespeist wird.

## Claims

1. A method for damping low frequency vibrations, in particular subsynchronous resonances, in an electrical supply grid (120) by way of at least one decentralized production unit (100, 112) connected to the electrical supply grid (120), in particular a wind turbine (100) or a wind farm (112), comprising the steps:
- feeding electrical power (P) by way of the at least one production unit (100,112) and
- supplementing the feeding by way of a supplementary component (P_{E}) for damping the low frequency vibrations, wherein
- the supplementary component (P_{E}) is determined depending on a simplified model (300, 400) of a synchronous machine, wherein
- the simplified model (300, 400) of the synchronous machine reproduces the vibration damping property of a synchronous machine, namely the vibration damping property of a damper cage of a synchronous machine with a damper cage,
- vibratory components of the synchronous machine on which the simplified model (300, 400) is based are not depicted or only depicted in a reduced manner, and
- the simplified model (300, 400) of the synchronous machine only reproduces the vibration damping property of a damper cage of a synchronous machine with a damper cage.

2. The method as claimed in claim 1, **characterized in that**
- the supplementary component (P_{E}) is a current which is fed in a supplementary manner, and/or that
- the supplementary component (P_{E}) is determined by damping properties of the synchronous machine on which the simplified model (300, 400) is based being emulated at output terminals (136) of the production unit (100, 112).

3. The method as claimed in claim 1 or 2, **characterized in that**
- the decentralized production unit (100, 112) feeds into the electrical supply grid (120) by means of an inverter (132) with an inverter output (134) via a network connection point (118),
- the supplementary component (P_{E}) is determined by at least one instantaneous value of a measurement voltage constantly being received at the inverter output (134), in the electrical supply grid (120), or at another point in between, in particular at the network connection point (118), and entered into the simplified model (300, 400) of the synchronous machine and
- a response of the simplified model (300, 400) to the instantaneous values of the measurement voltage (U) is used as a supplementary component (P_{E}).

4. The method as claimed in claim 3, **characterized in that**
- the electrical supply grid (120) has a line frequency and
- a generator voltage is emulated in the simplified model (300, 400), in particular for an oscillation-free operation of the synchronous machine on which the simplified model (300, 400) is based, if it is operated with the line frequency.

5. The method as claimed in one of the preceding claims, **characterized in that**
- an active power basic component (P_{G}) is specified and fed via an active power control, and
- the active power control works independent of the determination of the supplementary component (P_{E}).

6. The method as claimed in one of the preceding claims, **characterized in that**
- determining and supplementing the supplementary component (P_{E}) depending on the instantaneous values of a or the measurement voltage (U) takes place in such a way that a supplementary component (P_{E}) only results if the measurement voltage (U) deviates from a sinusoidal voltage without low frequency vibration, in particular that
- the supplementary component (P_{E}) automatically results if the measurement voltage (U) deviates from the sinusoidal voltage without low frequency vibration.

7. The method as claimed in one of the preceding claims, **characterized in that**
- for determining the supplementary component (P_{E}), a or the measurement voltage (U) is constantly received in three phases and transformed into d/q components,
- the d/q components of the measurement voltage are in each case provided to a d submodel (300) and a q submodel (400) of the simplified model (300, 400), wherein the d submodel (300) depicts the behavior of a d component and the q submodel (400) the behavior of a q component of the synchronous machine on which the simplified model (300, 400) is based,
- a d component and a q component of a current is in each case received or formed as a response of the d submodel (300) or the q submodel (400) to the d or q components of the measurement voltage (U),
- the d and the q components of the current are transformed back into a three-phase supplementary current and
- the supplementary current obtained in this way is additionally fed by the production unit as a supplementary component.

8. The method as claimed in one of the preceding claims, **characterized in that**
- the simplified model (300, 400) for an input voltage (U) transformed into d/q components, in particular a measurement voltage (U), has a longitudinal damper resistance (R_{Ds/s}) for a d component of the transformed input voltage (U) and a transverse damper resistance (R_{Qs/s}) for a q component of the transformed input voltage (U), wherein in the simplified model
- the d component of the transformed input voltage (U) is applied to the longitudinal damper resistance (R_{DS/s}) and results in a first power loss, which is received as a longitudinal power signal, and
- the q component of the transformed input voltage (U) is applied to the transverse damper resistance (R_{Qs/s}) and results in a second power loss, which is received as a transverse power signal, and
- the supplementary component is generated from the longitudinal and transverse power signal, in particular by retransformation of the longitudinal and transverse power signals provided in d/q components into a three-phase power signal.

9. A decentralized production unit (100, 112), in particular a wind turbine (100) or wind farm (112), for feeding electrical power (P) into an electrical supply grid (120) and for damping low frequency vibrations, in particular subsynchronous resonances, in the electrical supply grid (120), comprising
- a feeding unit (130) for feeding electrical power (P) into the electrical supply grid (120),
- a determination unit (140) for determining a supplementary component (P_{E}) for damping the low frequency vibrations, wherein the determination unit (140)
- has a model section (146) and said model section (146) has a simplified model (300, 400) of a synchronous machine, in order to determine the supplementary component (P_{E}) depending on the simplified model (300, 400) of the synchronous machine, and wherein
- the decentralized production unit (100, 112), in particular the feeding unit (130), is prepared to additionally feed the supplementary component (P_{E}) into the electrical supply grid (120), in order to damp the low frequency vibrations, wherein
- the simplified model (300, 400) of the synchronous machine reproduces the vibration damping property of a synchronous machine, namely the vibration damping property of a damper cage of a synchronous machine with a damper cage,
- vibratory components of the synchronous machine on which the simplified model (300, 400) is based are not depicted or only depicted in a reduced manner, and
- the simplified model (300, 400) of the synchronous machine only reproduces the vibration damping property of a damper cage of a synchronous machine with a damper cage.

10. The decentralized production unit (100, 112) as claimed in claim 9, **characterized in that** it uses a method as claimed in one of claims 1 to 8, in particular that a control unit (130, 140) is provided on which a method of this type is implemented.

11. The decentralized production unit (100, 112) as claimed in one of claims 9 or 10, **characterized in that**
- an inverter (132) is provided, in particular as a feeding unit (130), and the inverter (132) has an inverter output (134), in order to feed into the electrical supply grid (120) via a network connection point (118),
- a measuring unit (142) is provided for detecting a measurement voltage (U) at the inverter output (134), in the electrical supply grid (120), or at another point in between, in particular at the network connection point (118), in order to enter this measurement voltage (U) into the simplified model (300, 400) of the synchronous machine, so that
- the supplementary component (P_{E}) is determined by at least one instantaneous value of the measurement voltage (U) constantly being entered into the simplified model (300, 400) of the synchronous machine and
- a response of the simplified model (300, 400) to the instantaneous values of the measurement voltage (U) is used as a supplementary component (P_{E}).

12. The decentralized production unit (100, 112) as claimed in one of claims 9 to 11, **characterized in that** the determination unit (140), in particular the model section (146) and/or its simplified model (300, 400)
- has a transformation unit (144), in order to transform a or the measurement voltage (U) which is constantly received in three phases into d/q components for determining the supplementary component (P_{E}),
- has a d submodel (300) and a q submodel (300) of the simplified model (300, 400), wherein the d/q components of the measurement voltage (U) are in each case provided to the d submodel (300) or the q submodel (300) of the simplified model (300, 400), wherein the d submodel (300) depicts the behavior of a d component and the q submodel (400) the behavior of a q component of the synchronous machine on which the simplified model (300, 400) is based,
- has a receiving section, in order to in each case receive or form a d component and a q component of a current as a response of the d submodel (300) or the q submodel (400) to the d or q component of the measurement voltage (U),
- has a retransformation unit (148), in order to transform the d and the q components of the current back into a three-phase supplementary current and
- the production unit (100, 112) is prepared for the supplementary current obtained in this way to be additionally fed by the production unit as a supplementary component.

## Revendications

1. Procédé pour atténuer des oscillations basse fréquence, en particulier des résonances sous-synchrones, dans un réseau d'alimentation électrique (120) par au moins une unité de production décentralisée (100, 112) raccordée au réseau d'alimentation électrique (120), en particulier une éolienne (100) ou un parc éolien (112), comprenant les étapes :
- d'injection de puissance électrique (P) par l'au moins une unité de production (100, 112), et
- d'ajout d'un complément à l'injection par une portion complémentaire (P_{E}) pour atténuer les oscillations basse fréquence, dans lequel
- la portion complémentaire (P_{E}) est déterminée en fonction d'un modèle simplifié (300, 400) d'une machine synchrone, dans lequel
- le modèle simplifié (300, 400) de la machine synchrone reproduit la caractéristique d'atténuation d'oscillations d'une machine synchrone, à savoir la caractéristique d'atténuation d'oscillations d'une cage de système d'atténuation d'une machine synchrone avec une cage de système d'atténuation,
- des composants susceptibles d'osciller de la machine synchrone sous-jacente au modèle simplifié (300, 400) ne sont pas reproduits ou sont reproduits seulement de manière réduite, et
- le modèle simplifié (300, 400) de la machine synchrone reproduit seulement la caractéristique d'atténuation d'oscillations d'une cage de système d'atténuation d'une machine synchrone avec une cage de système d'atténuation.

2. Procédé selon la revendication 1, **caractérisé en ce que**
- la portion complémentaire (P_{E}) est un courant injecté en complément, et/ou que
- la portion complémentaire (P_{E}) est déterminée **en ce que** des caractéristiques d'atténuation de la machine synchrone sous-jacente au modèle simplifié (300, 400) sont émulées sur des bornes de sortie (136) de l'unité de production (100, 112).

3. Procédé selon la revendication 1 ou 2, **caractérisé en ce que**
- l'unité de production décentralisée (100, 112) procède à une injection par l'intermédiaire d'un point de raccordement au réseau (118) dans le réseau d'alimentation électrique (120) au moyen d'un onduleur (132) avec une sortie d'onduleur (134),
- la portion complémentaire (P_{E}) est déterminée **en ce qu'**en permanence au moins une valeur instantanée d'une tension de mesure est enregistrée sur la sortie d'onduleur (134), dans le réseau d'alimentation électrique (120), ou sur un autre point intercalé, en particulier sur le point de raccordement au réseau (118) et est entrée dans le modèle simplifié (300, 400) de la machine synchrone, et
- une réaction du modèle simplifié (300, 400) aux valeurs instantanées de la tension de mesure (U) est utilisée en tant que portion complémentaire (P_{E}).

4. Procédé selon la revendication 3, **caractérisé en ce que**
- le réseau d'alimentation électrique (120) présente une fréquence de réseau, et
- une tension de générateur est émulée dans le modèle simplifié (300, 400), en particulier pour un fonctionnement sans oscillation de la machine synchrone sous-jacente au modèle simplifié (300, 400) lorsque celle-ci fonctionne à la fréquence du réseau.

5. Procédé selon l'une quelconque des revendications précédentes, **caractérisé en ce que**
- la portion de base de puissance active (P_{G}) est spécifiée et injectée par l'intermédiaire d'une commande de puissance active, et
- la commande de puissance active fonctionne indépendamment de la détermination de la portion complémentaire (P_{E}).

6. Procédé selon l'une quelconque des revendications précédentes, **caractérisé en ce que**
- la détermination et l'ajout complémentaire de la portion complémentaire (P_{E}) sont effectués en fonction des valeurs instantanées d'une ou de la tension de mesure (U) de telle sorte qu'une portion complémentaire (P_{E}) ne découle que lorsque la tension de mesure (U) diverge d'une tension sinusoïdale sans oscillation basse fréquence, en particulier que
- la portion complémentaire (P_{E}) découle automatiquement lorsque la tension de mesure (U) diverge de la tension sinusoïdale sans oscillation basse fréquence.

7. Procédé selon l'une quelconque des revendications précédentes, **caractérisé en ce que**
- une ou la tension de mesure (U) est enregistrée en permanence de manière triphasée et est transformée en composantes d/q pour déterminer la portion complémentaire (P_{E}),
- les composantes d/q de la tension de mesure sont données respectivement sur un modèle partiel d (300) et un modèle partiel q (400) du modèle simplifié (300, 400), dans lequel le modèle partiel d (300) reproduit le comportement d'une composante d et le modèle partiel q (400) reproduit le comportement d'une composante q de la machine synchrone sous-jacente au modèle simplifié (300, 400),
- respectivement une composante d et une composante q d'un courant sont enregistrées ou obtenues en tant que réaction du modèle partiel d (300) ou du modèle partiel q (400) sur la composante d ou q de la tension de mesure (U),
- les composantes d et q du courant sont retransformées en sens inverse en un courant complémentaire triphasé, et
- le courant complémentaire ainsi obtenu est injecté en supplément par l'unité de production en tant que portion complémentaire.

8. Procédé selon l'une quelconque des revendications précédentes, **caractérisé en ce que**
- le modèle simplifié (300, 400) pour une tension d'entrée (U) transformée en composantes d/q, en particulier une tension de mesure (U), présente une résistance de système d'atténuation longitudinal (R_{Ds/s}) pour une composante d de la tension d'entrée (U) transformée et une résistance de système d'atténuation transversal (R_{Qs/s}) pour une composante q de la tension d'entrée (U) transformée, dans lequel dans le modèle simplifié
- la composante d de la tension d'entrée (U) transformée repose sur la résistance de système d'atténuation longitudinal (R_{Ds/s}) et donne lieu à une première perte de puissance qui est enregistrée en tant que signal de puissance longitudinal, et
- la composante q de la tension d'entrée (U) transformée repose sur la résistance de système d'atténuation transversal (R_{Qs/s}) et donne lieu à une deuxième perte de puissance qui est enregistrée en tant que signal de puissance transversal, et
- la portion complémentaire est générée à partir du signal de puissance longitudinal et du signal de puissance transversal, en particulier par transformation inverse des signaux de puissance longitudinal et transversal donnés dans les composantes d/q en un signal de puissance triphasé.

9. Unité de production décentralisée (100, 112), en particulier éolienne (100) ou parc éolien (112), pour injecter une puissance électrique (P) dans un réseau d'alimentation électrique (120) et pour atténuer des oscillations basse fréquence, en particulier des résonances sous-synchrones, dans le réseau d'alimentation électrique (120), comprenant
- une unité d'injection (130) pour injecter une puissance électrique (P) dans le réseau d'alimentation électrique (120),
- une unité de détermination (140) pour déterminer une portion complémentaire (P_{E}) pour atténuer les oscillations basse fréquence, dans laquelle l'unité de détermination (140)
- présente une section de modèle (146) et la section de modèle (146) présente un modèle simplifié (300, 400) d'une machine synchrone pour déterminer la portion complémentaire (P_{E}) en fonction du modèle simplifié (300, 400) de la machine synchrone, et dans laquelle
- l'unité de production décentralisée (100, 112), en particulier l'unité d'injection (130), est préparée pour injecter la portion complémentaire (P_{E}) en supplément dans le réseau d'alimentation électrique (120) pour atténuer les oscillations basse fréquence, dans laquelle
- le modèle simplifié (300, 400) de la machine synchrone reproduit la caractéristique atténuant les oscillations d'une machine synchrone, à savoir la caractéristique d'atténuation d'oscillation d'une cage de système d'atténuation d'une machine synchrone avec une cage de système d'atténuation,
- des composants susceptibles d'osciller de la machine de synchronisation sous-jacente au modèle simplifié (300, 400) ne sont pas reproduits ou sont reproduits seulement de manière réduite, et
- le modèle simplifié (300, 400) de la machine synchrone reproduit seulement la caractéristique d'atténuation d'oscillations d'une cage de système d'atténuation d'une machine synchrone avec une cage de système d'atténuation.

10. Unité de production décentralisée (100, 112) selon la revendication 9, **caractérisée en ce qu'**elle utilise un procédé selon l'une quelconque des revendications 1 à 8, en particulier qu'est prévue une unité de commande (130, 140), sur laquelle un tel procédé est implémenté.

11. Unité de production décentralisée (100, 112) selon l'une quelconque des revendications 9 ou 10, **caractérisée en ce que**
- un onduleur (132) est prévu, en particulier en tant qu'unité d'injection (130), et l'onduleur (132) présente une sortie d'onduleur (134) pour procéder à une injection dans le réseau d'alimentation électrique (120) de surcroît par l'intermédiaire d'un point de raccordement au réseau (118),
- une unité de mesure (142) est prévue pour détecter une tension de mesure (U) sur la sortie d'onduleur (134) dans le réseau d'alimentation électrique (120) ou sur un autre point intercalé, en particulier sur le point de raccordement au réseau (118) pour entrer cette tension de mesure (U) dans le modèle simplifié (300, 400) de la machine synchrone de sorte que
- la portion complémentaire (P_{E}) est déterminée **en ce qu'**en permanence au moins une valeur instantanée de la tension de mesure (U) est entrée dans le modèle simplifié (300, 400) de la machine synchrone, et
- une réaction du modèle simplifié (300, 400) aux valeurs instantanées de la tension de mesure (U) est utilisée en tant que portion complémentaire (P_{E}).

12. Unité de production décentralisée (100, 112) selon l'une quelconque des revendications 9 à 11, **caractérisée en ce que** l'unité de détermination (140), en particulier la section de modèle (146) et/ou son modèle simplifié (300, 400),
- présente une unité de transformation (144) pour transformer une ou la tension de mesure (U) enregistrée en permanence de manière triphasée en des composantes d/q pour déterminer la portion complémentaire (P_{E}),
- présente un modèle partiel d (300) et un modèle partiel q (300) du modèle simplifié (300, 400), dans laquelle les composantes d/q de la tension de mesure (U) sont entrées respectivement sur le modèle partiel d (300) ou sur le modèle partiel q (300) du modèle simplifié (300, 400), dans laquelle le modèle partiel d (300) reproduit le comportement d'une composante d et le modèle partiel q (400) reproduit le comportement d'une composante q de la machine synchrone sous-jacente au modèle simplifié (300, 400),
- présente une section d'enregistrement pour enregistrer ou obtenir respectivement une composante d et une composante q d'un courant en tant que réaction du modèle partiel d (300) ou du modèle partiel q (400) à la composante d ou q de la tension de mesure (U),
- présente une unité de transformation inverse (148) pour transformer en sens inverse les composantes d et q du courant en un courant complémentaire triphasé, et
- l'unité de production (100, 112) est préparée de telle manière que le courant complémentaire ainsi obtenu est injecté en supplément en tant que portion complémentaire par l'unité de production.
